# EUROPÄISCHE PATENTSCHRIFT

(11) **EP 3 486 045 B1**
(45) Veröffentlichungstag und Bekanntmachung des Hinweises auf die Patenterteilung: **21.07.2021**
(21) Anmeldenummer: 17201880.6
(22) Anmeldetag: 15.11.2017
(51) Int. Cl.: B25J 19/00, B25J 15/00, B25J 15/06

(54) **PNEUMATISCH BETÄTIGTER GREIFER MIT GREIFFLÄCHENBESCHICHTUNG**
PNEUMATICALLY OPERATED GRIPPER WITH GRIPPING SURFACE COATING
PRÉHENSEUR PNEUMATIQUE AVEC REVÊTEMENT DE SURFACE DE PRÉHENSION

(43) Veröffentlichungstag der Anmeldung: 22.05.2019
(73) Patentinhaber: FIPA Holding GmbH, 85737 Ismaning (DE)
(72) Erfinder: Schanz, Henning, 82205 Gilching (DE)
(74) Vertreter: Trinks, Ole

(56) Entgegenhaltungen:
- WO-A2-03/099951
- WO-A2-2007/121450
- DE-A1-102012 215 797
- DE-U1-202015 103 985
- US-A1- 2014 227 473

## Beschreibung

Die vorliegende Erfindung betrifft einen Greifer, insbesondere einen pneumatisch betätigten Greifer in Gestalt eines Sauggreifers oder einer Greifzange.

Ein derartiger Greifer ist dem Prinzip nach aus dem Stand der Technik bekannt. Als Beispiel hierfür sei die DE 19 855 630 B4 genannt, die einen pneumatisch betätigten Greifer in Gestalt einer Greifzange betrifft. Als weiteres Beispiel sei die DE 20 2005 0071 45 U1 genannt, die einen Sauggreifer zum Ansaugen und Halten von Werkstücken betrifft.

Die DE 20 2015 103985 U1 betrifft einen Greifer, dessen Greifflächen mit einem Elastomer beschichtet sind.

Die DE 10 2012 215797 A1 offenbar einen pneumatischen Greifer mit einen Reibbelag an der Greiffläche mit borstenartig, im Wesentlichen senkrecht zur Oberfläche abstehenden stabartigen Strukturelementen, deren Abmessungen in Länge und/oder Dicke im Bereich von Mikrometern oder Nanometern liegen.

Die Druckschrift WO 2003/099951 A2 betrifft Verfahren zur Oberflächenmodifizierung eines Objektes, um die Adhäsionsfähigkeit des Objektes zu erhöhen. Dabei wird die Oberfläche einer Strukturierung unterzogen, so dass eine Vielzahl von Vorsprüngen gebildet wird, die jeweils mit einem Fußteil und einem Kopfteil gebildet werden, wobei der Kopfteil eine von der Oberfläche weisende Stirnfläche besitzt, und wobei jeder Vorsprung mit einer Größe derart gebildet wird, dass alle Stirnflächen die gleiche senkrechte Höhe über der Oberfläche besitzen und eine adhärente, durch gegenseitige Abstände zwischen den Stirnflächen unterbrochene Kontaktfläche bilden.

Unabhängig von ihrer Ausgestaltung werden Greifer häufig im Zusammenhang mit Industrierobotern zum Handhaben verschiedenartiger Gegenstände eingesetzt. Greifer, die als Sauggreifer ausgeführt sind, werden häufig dafür benötigt, um Gegenstände anzusaugen, anzuheben und an einen anderen Ort verbringen zu können. Hierfür weist ein Sauggreifer in der Regel mindestens einen flexiblen Saugnapf auf, der einen an eine Unterdruckquelle anschließbaren Saugraum begrenzt und eine Saugöffnung im umgrenzenden vorderen Grenzbereich sowie einen gegenüberliegenden hinteren Endbereich aufweist. Die Saugöffnung des Saugnapfes ist in der Regel mit einer Dichtlippe gebildet, die an der Oberfläche des zu handhabenden Gegenstandes (Greifgut / Werkstück) anliegt bzw. anlegbar ist und dann zwischen dem Saugnapf und der Oberfläche des Gegenstandes eine Saugraum umschließt, welcher entsprechend evakuiert werden kann. Dadurch legt sich der Saugnapf dicht an die Oberfläche des Gegenstandes an und hält diesen pneumatisch fest.

Insbesondere bei der Handhabung von Blechen, z. B. in der Automobilindustrie, haben sich derartige Sauggreifer bewährt.

Greifer in Gestalt einer Greifzange weisen in der Regel zwei zangenförmig gegeneinander verschwenkbare oder längs geeigneter Führungen linear gegeneinander verschiebbare starre Greifbacken auf, die einen zu greifenden Gegenstand mit einander zugewandten Greiferflächen von entgegengesetzten Seiten her erfassen und einspannen.

Die Verwendung von bekannten Greifersystemen - sei es in Gestalt von Sauggreifern oder in Gestalt von Greifzangen - zur Handhabung von insbesondere bruch-und/oder verformungsempfindlichen Gegenständen ist derzeit jedoch nur eingeschränkt möglich. Dies liegt insbesondere daran, dass eine prozesssichere Handhabung von Gegenständen mit Hilfe von Sauggreifern oder Greifzangen verlangt, dass die zu handhabenden Gegenstände entsprechend verformungsteif und bruchunempfindlich sind.

Darüber hinaus lässt sich bei der Anwendung von Greifersystemen zum Handhaben von Gegenständen nicht vermeiden, dass das mindestens ein Greiforgan des Greifers (Saugnapf bei einem als Sauggreifer ausgeführten Greifer bzw. Greifbacke bei einer Greifzange) in Kontakt kommt, was unter Umständen zu einer Beschädigung insbesondere der Oberfläche des zu greifenden Gegenstandes führt. Aufgabe der vorliegenden Erfindung ist es, einen Greifer der eingangs genannten Art anzugeben, welcher ein Greifgut schonend greifen kann, wobei beim Handhaben vom Greifgut sowohl das Greifgut als auch das mindestens ein Greiforgan des Greifers wirksam vor Beschädigungen geschützt werden.

Insbesondere soll ein Greifer angegeben werden, mit welchem ein Greifgut abdrucklos und rückstandslos gehandhabt werden kann.

Diese Aufgabe wird erfindungsgemäß durch den Gegenstand des unabhängigen Patentanspruches 1 gelöst, wobei vorteilhafte Weiterbildungen des Erfindungsgemäßen Greifers in den entsprechenden abhängigen Patentansprüchen angegeben werden.

Demgemäß betrifft die vorliegende Erfindung insbesondere einen Greifer, welcher einen Greiferhalter sowie mindestens ein Greiforgan aufweist. Über den Greiferhalter ist der Greifer vorzugsweise lösbar mit einem Manipulator, Roboterarm oder dergleichen verbindbar. Das mindestens ein Greiforgan des Greifers ist mit dem Greiferhalter verbunden und ist derart ausgeführt, dass bei Manipulation des mindestens einen Greiforgans ein Greifgut bzw. Werkstück greifbar ist.

Um das Greifgut möglichst schonend greifen zu können und wirksam eine Beschädigung der Oberfläche des Greifgutes und/oder der Oberfläche des mindestens einen Greiforgans zu verhindern, ist erfindungsgemäß insbesondere vorgesehen, dass das mindestens eine Greiforgan wenigstens in dem Bereich, der beim Manipulieren des mindestens einen Greiforgans mit dem Greifgut bzw. Werkstück in Kontakt kommt, eine Beflockung aufweist.

Als weitere wesentliche Eigenschaft der Beflockung ist zu nennen, dass sie auch verhindert, das Abdrücke / Rückstände des Greifers auf dem Greifgut verbleiben. Solche Abdrücke bzw. Rückstände sind zum einen aus optischen Gründen oft nicht zulässig und verhindern im ungünstigsten Fall sogar eine weitere fehlerfreie Oberflächenbehandlung, die z.B. das Lackieren des Greifgutes. Eine typische Oberflächenbehandlung, die Abdruckfreiheit erfordert, ist insbesondere auch das Metallisieren und/oder Bedampfen der Oberfläche.

Vorzugsweise weist die Beflockung Faserfilamente insbesondere in Gestalt von kurzgeschnittenen Fasern auf. Diese Faserfilamente bestehen vorzugsweise aus Polyamid, Viskose und/oder Polyester.

Gemäß Ausführungsformen des erfindungsgemäßen Greifers sind die Faserfilamente der Beflockung in dem Bereich, der beim Manipulieren des mindestens einen Greiforgans mit dem Greifgut / Werkstück in Kontakt kommt, zumindest bereichsweise mit dem mindestens einen Greiforgan derart verbunden oder zumindest bereichsweise in dem Material des mindestens einen Greiforgans derart aufgenommen, dass die Faserfilamente vorzugsweise im Wesentlichen senkrecht von der Oberfläche des Greiforgans abstehen.

Hierbei hat sich herausgestellt, dass eine besonders schonende Handhabung von Gegenständen mit Hilfe des erfindungsgemäßen Greifers möglich ist, wenn der von der Oberfläche des Greiforgans abstehende Bereich der Faserfilamente eine Länge von 0,1 bis 1,0 mm vorzugsweise 0,2 bis 0,8 mm und noch bevorzugter 0,3 bis 0,7 mm aufweist. Der Längenbereich zwischen 0,3 bis 0,7 mm ist ein Kompromiss zwischen einer besonders schonend realisierbaren Handhabung von Gegenständen einerseits und einer möglichst prozesssicheren Handhabung der Gegenstände andererseits.

Für die Beflockung kommen unterschiedliche Lösungen in Frage. Im Rahmen von durchgeführten Versuchen hat sich jedoch gezeigt, dass es besonders vorteilhaft ist, wenn die Beflockung Faserfilamente mit einem Gewicht (Dtex) von 2,0 bis 5,0 g pro 10.000 m und vorzugsweise mit einem Gewicht von 2,5 bis 4,0 g pro 10.000 m und noch bevorzugter 2,8 bis 3,8 g pro 10.000 m aufweist.

Gemäß Ausführungsformen des erfindungsgemäßen Greifers ist dieser als Sauggreifer ausgeführt und weist einen als Greiforgan dienenden flexiblen Saugnapf sowie einen als Greifhalter dienenden Saugnapfhalter auf. Der als Greiforgan dienende flexible Saugnapf begrenzt einen an eine Unterdruckquelle anschließbaren Saugraum und weist mindestens eine Dichtung mit einer zumindest teilweise in Richtung zu greifenden Greifguts / Werkstücks zeigenden Dichtfläche auf. Der als Greiferhalter dienende Saugnapfhalter ist mit dem hinteren Endbereich des Saugnapfs verbunden.

Bei dieser denkbaren Realisierung des erfindungsgemäßen Greifers ist insbesondere vorgesehen, dass die Dichtfläche der mindestens einen Dichtung des Sauggreifers zumindest bereichsweise mit der Beflockung versehen ist.

In Weiterbildungen dieser Realisierung des erfindungsgemäßen Greifers ist vorgesehen, dass der Saugnapf einen Saugöffnung angrenzenden vorderen Endbereich und eine die Saugöffnung umgebende Dichtung aufweist, wobei diese Dichtung insbesondere in Gestalt von mindestens einer Dichtlippe ausgeführt ist, welche eine zumindest teilweise in Richtung eines zu greifenden Greifguts / Werkstücks zeigende Dichtfläche aufweist, welche zumindest bereichsweise mit der Beflockung versehen ist.

Alternativ oder zusätzlich hierzu ist es denkbar, wenn der als Sauggreifer ausgeführte Greifer mindestens ein Niederhalterelement aufweist, welches eine in Richtung eines zu greifenden Greifguts / Werkstücks zeigende Anlagefläche aufweist, die zumindest bereichsweise mit der Beflockung versehen ist.

Das Vorsehen eines solchen Niederhalterelements ermöglicht es, dass der als Sauggreifer ausgeführte Greifer auch relativ schwere, biegeschlaffe Materialien besonders schonend handhaben kann.

In diesem Zusammenhang ist es im Hinblick auf das Niederhalterelement von Vorteil, wenn die Anlagefläche des mindestens einen Niederhalterelements in einer Ebene liegt, die den von dem Saugnapf begrenzenden Saugraum schneidet, wobei der vordere Endbereich des Saufnapfes unter Veränderung der Saugnapflänge relativ zu dem hinteren Endbereich des Saugnapfes und relativ zu der Anlagefläche des mindestens einen Niederhalterelements bewegbar ist.

Alternativ zu der zuvor diskutierten Ausführungsform bietet es sich jedoch ebenfalls an, den erfindungsgemäßen Greifer als Greifzange auszuführen, bei welchem zwei zangenförmig gegeneinander verschwenkbare oder längs geeigneter Führungen linear gegeneinander verschiebbare Greifbacken als Greiforgane zum Einsatz kommen. Diese Greifbacken sind ausgebildet, ein zu greifendes Greifgut bzw. Werkstück mit einander zugewandten Greiferflächen von entgegengesetzten Seiten her zu erfassen und/oder einzuspannen. Bei dieser Ausführungsform des erfindungsgemäßen Greifers ist insbesondere vorgesehen, dass die Greiferflächen zumindest bereichsweise mit der Beflockung versehen sind.

In einer Weiterbildung dieser Ausführungsform ist vorgesehen, dass die Greifbacken des als Greifzange ausgeführten Greifers zumindest in dem Bereich der Greiferflächen von einem elastischen Material überzogen sind, wobei die Faserfilamente der Beflockung zumindest teilweise von der Oberfläche dieses elastischen Materials abstehen. Als elastisches Material kommen verschiedene Materialen in Frage, wobei sich allerdings ein synthetischer Kautschuk, insbesondere ein hydrierter Acrlynitrilbutadien-Kautschuk (HNBR) als besonders geeignet gezeigt hat. HNBR-Material weist die Vorteile auf, dass dieses Material aufgrund fehlender Doppelbindungen sehr reaktionsträge ist. Somit ist die Haltbarkeit des Materials erhöht. Außerdem ist HNBR-Material relativ temperaturbeständig, wodurch die mit HNBR überzogenen Greifbacken bis beispielsweise einer Temperatur von bis zu 150 Grad Celsius betrieben werden können bzw. mit Greifgütern in Kontakt gebracht werden können, die eine Temperatur von bis zu 150 Grad Celsius aufweisen.

Nachfolgend werden exemplarisch Ausführungsformen des erfindungsgemäßen Greifers anhand der beiliegenden Zeichnungen näher beschrieben.

Es zeigen:
- FIG. 1a-c: verschiedene Ansichten einer ersten exemplarischen Ausführungsform des erfindungsgemäßen Greifers in Gestalt eines Sauggreifers; und
- FIG. 2a-c: verschiedene Ansichten einer zweiten exemplarischen Ausführungsform des erfindungsgemäßen Greifers in Gestalt einer Greifzange.

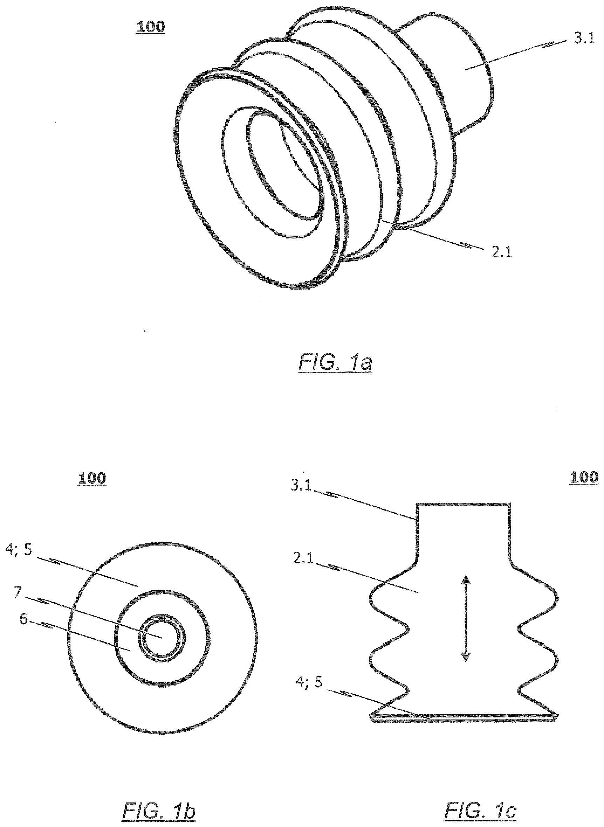

In FIG. 1a-c ist in einer Seitenansicht, einer isometrischen Ansicht sowie einer Draufsicht von unten eine erste exemplarische Ausführungsform des erfindungsgemäßen Greifers 100 gezeigt. Diese exemplarische Ausführungsform ist in Gestalt eines Sauggreifers ausgestaltet.

Der Sauggreifer weist eine insgesamt längliche Gestalt mit einer Längsachse auf. Rückseitig ist er mit einem Greiferhalter beliebiger Art ausgestattet oder ausstattbar, über den der Sauggreifer an einer in den Zeichnungen nicht gezeigten Handhabungsvorrichtung vorzugsweise in lösbarer Weise festlegbar ist. Durch die Handhabungsvorrichtung lässt sich der Sauggreifer bewegen und positionieren, und zwar entsprechend dem jeweiligen Einsatzzweck. Die Handhabungsvorrichtung ist insbesondere von maschineller Art und kann einen oder mehrere elektrische und/oder fluidische Antriebe enthalten.

Der Sauggreifer enthält einen flexiblen Saugnapf 2.1, welcher als Greiforgan dient, der mit seinem rückwertigen Endbereich an dem Greiferhalter (Saugnapfhalter 3.1) befestigt ist. Bevorzugt weist der Saugnapf 2.1 gummielastische Eigenschaften auf, wobei er insbesondere aus einem Elastomermaterial besteht. Der Greiferhalter (Saugnapfhalter 3.1) besteht beispielsweise aus Metall, wobei der Saugnapf 2.1 bei seiner Herstellung aus Kunststoffmaterial mit seinem rückseitigen Endbereich durch Spritzgießen an den Greiferhalter (Saugnapfhalter 3.1) stoffschlüssig angeformt worden sein kann.

Der Saugnapf 2.1 ist ein Hohlkörper und erstreckt sich ausgehend von seinem rückseitigen Endbereich koaxial der Längsachse bis hin zu einer Vorderseite, wo er mit einem vorderen Endbereich endet.

Der Saugnapf 2.1 umgrenzt einen Saugraum 6. Dieser ist an der Vorderseite des Saugnapfes 2.1 über eine Saugöffnung hinweg zur Umgebung hin offen.

Über einen Absaugkanal 7 lässt sich der Saugraum 6 bedarfsgemäß an eine nicht dargestellte Unterdruckquelle anschließen. Bei Unterdruckquellen handelt es sich beispielsweise um eine Vakuumpumpe oder um eine nach dem Ejektorprinzip arbeitende Saugdüse. Die Unterdruckquelle kann extern oder aber auch an der Handhabungsvorrichtung oder direkt an den Sauggreifer angeordnet sein.

Bei entsprechender Ansteuerung kann der Saugraum 6 über den Absaugkanal 7 hinweg auch mit Atmosphärendruck oder einem höheren Überdruck beaufschlagt werden, wenn ein zuvor erzeugter Unterdruck wieder abgebaut werden soll.

Aufgrund der Flexibilität des Saugnapfes 2.1 ist der vordere Endbereich in der Lage, eine durch einen Doppelpfeil angedeutete lineare Hubbewegung relativ zu dem rückseitigen Endbereich auszuführen. Hierbei verändert sich die Länge des Saugnapfes 2.1.

Solange der Saugnapf 2.1 noch nicht an einen handzuhabenden Gegenstand angesetzt ist, liegt die in FIG. 1a-c gezeigte Grundstellung vor. Der Saugnapf 2.1 nimmt hier seine maximale Länge ein, die ihm durch seine Struktur und Materialwahl aufgeprägt ist.

Gemäß der in den Zeichnungen dargestellten Ausführungsform ist der Saugnapf 2.1 faltenbalkartig strukturiert. Seine Wandung weist somit - im Längsschnitt gesehen - einen zick-zack-förmigen Verlauf auf. Dadurch verfügt der Saugnapf 2.1 an der dem Saugraum 6 zugewandten Innenseite über eine Innenfaltung mit einer oder mehreren ringförmigen Innenfalten und an seinem Außenumfang über eine Außenfaltung mit einer oder mehreren ringförmigen Außenfalten. Ist - wie bei dem in FIG. 1 gezeigten Ausführungsbeispiel - eine Mehrzahl von Innenfalten und/oder von Außenfalten vorhanden, so sind diese koaxial aufeinander angeordnet.

Bei der exemplarischen Ausführungsform des erfindungsgemäßen Greifers 100 gemäß FIG. 1a-c ist der Saugnapf 2.1 bereichsweise mit einer Beflockung 5 versehen. Insbesondere ist bei der dargestellten Ausführungsform der vordere Endbereich des Saugnapfes 2.1, welcher mit einem handzuhabenden Gegenstand in Kontakt kommt, mit der Beflockung 5 versehen.

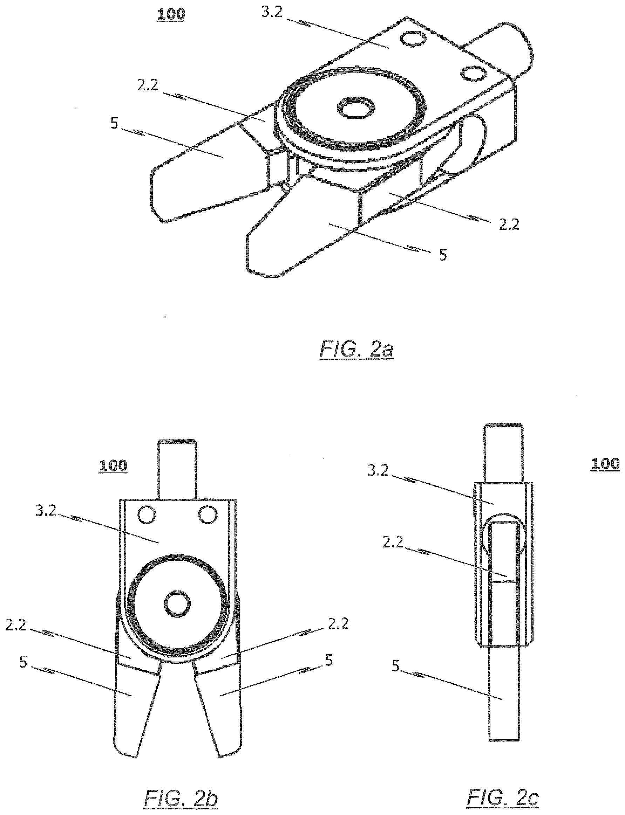

In FIG. 2a-c ist eine weitere exemplarische Ausführungsform des erfindungsgemäßen Greifers 100 gezeigt und zwar in einer isometrischen Ansicht, in einer Seitenansicht sowie in einer Draufsicht. Bei dieser zweiten exemplarischen Ausführungsform des erfindungsgemäßen Greifers 100 ist der Greifer 100 als Greifzange ausgebildet.

Die Greifzange weist Greifbacken 2.2 als Greiforgan auf, welche direkt angrenzend an einen Greifzangenkörper 3.2, welcher als Greiferhalter liegt, angeordnet sind. Zumindest im Bereich der Spitzen der Greifbacken 2.2 ist eine Beschichtung mit einem Flockmaterial vorgesehen. Beim Greifen der Greifbacken 2.2 eines Greifgutes kontaktiert somit die Beflockung 5 das Greifgut. Hierdurch wird gewährleistet, dass keine beispielsweise scharfkantigen Metallkanten der Greifbacken 2.2 in Kontakt mit dem Greifgut treten können.

Zur Herstellung des erfindungsgemäßen Greifers 100 wird innerhalb der zu beflockenden Bereiche der Greiforgane 2.1, 2.2 ein reaktionsfähiger Beflockungskleber aufgebracht. Der Beflockungskleber muss nach seinem Auftrag eine Zeitspanne lang aktiv und reaktionsfähig bzw. "klebrig" sein, damit die typischerweise elektrostatisch aufgeschossenen Flockfasern wenigstens geringfügig in diese klebrige Masse eindringen können und dort mit Vernetzung des Klebers verankert werden. Typischerweise wird diese offene oder reaktive Phase des Klebers wenigstens einige Minuten betragen, beispielsweise vier bis fünf Minuten und die Flockfasern müssen innerhalb dieser offenen Kleberphase aufgebracht werden.

Als Beflockungskleber kommt beispielsweise ein Reaktionskleber auf der Basis von Epoxiden oder (Meth)acrylat Estern oder sonstigen Vinylverbindungen oder bekannte 2-Komponentenkleber, beispielsweise auf der Basis von Polyurethan-bildenden Komponenten zum Einsatz.

Vorzugsweise werden Beflockungskleber auf der Basis wässriger Polyurethan- und Polyurethan Harnstoff-Dispersionen eingesetzt. Das Arbeiten mit solchen wässrigen Kleberdispersionen vermeidet die Bildung entzündbarer Luft/Lösungsmittel Dampf-Gemische, die im Hinblick auf die nachfolgende, vorzugsweise im Hochspannungsfeld erfolgende elektrostatische Beflockung 5 bedenklich sein könnte.

Der flüssige Beflockungskleber wird typischerweise bei Umgebungstemperatur auf die entsprechenden Bereiche der Greiforgane 2.1, 2.2 bzw. des Greiforgans aufgetragen und weist nach seinem Auftrag eine mehrere Minuten andauernde offene bzw. reaktive Kleberphase auf, innerhalb der das Aufbringen der Flockfasern erfolgen muss. Typischerweise können flüssige Beflockungskleber dieser Art in einer Schichtdicke von etwa 25 µm bis etwa 150 µm aufgetragen werden.

Auf der reaktionsfähigen bzw. klebrigen Kleberschicht werden die Flockfasern aufgebracht. Es werden Flockfasern aus Viskose, Polyester und/oder Polyamid aufgebracht, die typischerweise zu Flockungszwecken eingesetzt werden. Solche Flockfasern können beispielsweise eine Flockfaserlänge von 0,2 mm bis 7,5 mm sowie einen Flockfasertiter von 1,0 bis 5,0 Dtex aufweisen.

Nach Aufbringung der Flockfasern wird die reaktionsfähige bzw. klebrige Kleberschicht bestimmungsgemäß umgesetzt, um den Kleber zu vernetzen und um die Flockfasern mit einem Endabschnitt in der vernetzten Kleberschicht zu verankern. "Bestimmungsgemäß" meint hier die sich aus der Kleberzusammensetzung ergebenden Maßnahmen zur chemischen Umsetzung und Vernetzung des Klebers.

Die Erfindung ist nicht auf die in den Zeichnungen exemplarisch gezeigten Ausführungsformen des erfindungsgemäßen Greifers 100 beschränkt, sondern ergeben sich aus einer Zusammenschau sämtlicher hierin offenbarter Merkmale.

## Patentansprüche

1. Pneumatisch betätigter Greifer (100) in Gestalt eines Sauggreifers oder einer Greifzange, wobei der Greifer (100) Folgendes aufweist:
- einen Greiferhalter (3.1, 3.2), über den der Greifer (100) vorzugsweise lösbar mit einem Manipulator, Roboterarm oder dergleichen verbindbar ist; und
- mindestens ein Greiforgan (2.1, 2.2), welches mit dem Greiferhalter (3.1, 3.2) verbunden und derart ausgeführt ist, dass bei Manipulation des mindestens einen Greiforgans (2.1, 2.2), ein Greifgut bzw. Werkstück greifbar ist,
**gekennzeichnet dadurch, dass** das mindestens eine Greiforgan (2.1, 2.2) wenigstens in dem Bereich, der beim Manipulieren des mindestens einen Greiforgans (2.1, 2.2) mit dem Greifgut / Werkstück in Kontakt kommt, eine Beflockung (5) aufweist.

2. Greifer (100) nach Anspruch 1,
wobei die Beflockung (5) Faserfilamente, insbesondere in Gestalt von kurzgeschnittenen Fasern, vorzugsweise aus Polyamid, Viskose und/oder Polyester aufweist, die in dem Bereich, der beim Manipulieren des mindestens einen Greiforgans (2.1, 2.2) mit dem Greifgut / Werkstück in Kontakt kommt, zumindest bereichsweise mit dem mindestens einen Greiforgan (2.1, 2.2) derart verbunden oder zumindest bereichsweise in dem Material des mindestens einen Greiforgans (2.1, 2.2) derart aufgenommen sind, dass die Faserfilamente vorzugsweise im Wesentlichen senkrecht von der Oberfläche des Greiforgans (2.1, 2.2) abstehen.

3. Greifer (100) nach Anspruch nach Anspruch 2,
wobei der von der Oberfläche des Greiforgans (2.1, 2.2) abstehende Bereich der Faserfilamente eine Länge von 0,1 bis 1,0 mm, vorzugsweise 0,2 bis 0,8 mm und noch bevorzugter 0,3 bis 0,7 mm aufweist.

4. Greifer (100) nach den Ansprüche 1 bis 3,
wobei die Beflockung (5) Faserfilamente mit einem Gewicht (Dtex) von 2,0 bis 5,0 g pro 10.000 m, vorzugsweise 2,5 bis 4,0 g pro 10.000 m und noch bevorzugter 2,8 bis 3,8 g pro 10.000 m aufweist.

5. Greifer (100) nach einem der Ansprüche 1 bis 4,
wobei der Greifer (100) als Sauggreifer ausgeführt ist, welcher Folgendes aufweist:
- einen als Greiforgan (2.1) dienenden flexiblen Saugnapf, der einen an eine Unterdruckquelle anschließbaren Saugraum (6) begrenzt und mindestens eine Dichtung mit einer zumindest teilweisen in Richtung eines zu greifenden Greifguts / Werkstücks zeigenden Dichtfläche (4) aufweist; und
- einen als Greiferhalter (3.1, 3.2) dienenden Saugnapfhalter, welcher mit einem hinteren Endbereich des Saugnapfes verbunden ist,
wobei die Dichtfläche (4) der mindestens eine Dichtung zumindest bereichsweise mit der Beflockung (5) versehen ist.

6. Greifer (100) nach Anspruch 5,
wobei der Saugnapf einen eine Saugöffnung umgrenzenden vorderen Endbereich und eine die Saugöffnung umgebende Dichtung, insbesondere in Gestalt von mindestens einer Dichtlippe, aufweist, welche eine zumindest teilweise in Richtung zu eines greifenden Greifguts / Werkstückes zeigende Dichtfläche (4) aufweist, die zumindest bereichsweise mit der Beflockung (5) versehen ist.

7. Greifer (100) nach Anspruch 5 oder 6,
wobei mindestens ein Niederhalterelement vorgesehen ist, welches eine in Richtung eines zu greifenden Greifguts / Werkstücks zeigende Anlagefläche aufweist, die zumindest bereichsweise mit der Beflockung (5) versehen ist.

8. Greifer (100) nach Anspruch 7,
wobei die Anlagefläche des mindestens einen Niederhalterelements in einer Ebene liegt, die den von dem Saugnapf begrenzten Saugraum (6) schneidet, wobei der vordere Endbereich des Saugnapfes unter Veränderung der Saugnapflänge relativ zu dem hinteren Endbereich des Saugnapfes und relativ zu der Anlagefläche des mindestens einen Niederhalterelements bewegbar ist.

9. Greifer (100) nach einem der Ansprüche 1 bis 4,
wobei der Greifer (100) als Greifzange ausgeführt ist und zwei zangenförmig gegeneinander verschwenkbare oder längs geeigneter Führungen linear gegeneinander verschiebbare Greifbacken aufweist, welche als Greiforgan (2.2) dienen und ausgebildet sind, ein zu greifendes Greifgut bzw. Werkstück mit einander zugewandten Greiferflächen von entgegengesetzten Seiten her zu erfassen und/oder einzuspannen, wobei die Greiferflächen zumindest bereichsweise mit der Beflockung (5) versehen sind.

10. Greifer (100) nach Anspruch 9,
wobei die Greifbacken zumindest in dem Bereich der Greiferflächen von einem elastischen Material überzogen sind, und wobei die Faserfilamente der Beflockung (5) zumindest teilweise von der Oberfläche des elastischen Materials abstehen.

11. Greifer (100) nach Anspruch 10,
wobei das elastische Material ein synthetischer Kautschuk, insbesondere ein hydrierter Acrylnitrilbutadien-Kautschuk (HNBR) ist.

12. Greifer (100) nach einem der Ansprüche 9 bis 11,
wobei der als Greifzange ausgeführte Greifer (100) ein als Greiferhalter (3.2) dienendes Gehäuse aufweist, in welchem ein vorzugsweise pneumatisch betätigbarer Linearantrieb zumindest bereichsweise ausgebildet ist.

13. Verwendung eines Greifers nach einem der Ansprüche 1 bis 12 zum Handhaben von Wafern, Halbleiterungspodukten und/oder Halbleiterbauelemente, insbesondere im Bereich der Halbleiterfertigung, insbesondere Lithografie, oder im Bereich der Waferinspektion.

14. Verwendung eines Greifers nach einem der Ansprüche 1 bis 12 zum Handhaben von oberflächenveredelten Produkten, insbesondere in der Fahrzeugindustrie, und/oder zum Handhaben von Spiegeln und/oder optischen Elementen.

## Claims

1. A pneumatically actuated gripper (100) in the form of a vacuum gripper or gripping tongs, wherein the gripper (100) comprises the following:
- a gripper holder (3.1, 3.2) via which the gripper (100) is preferably detachably connectable to a manipulator, robotic arm or the like; and
- at least one gripping member (2.1, 2.2) which is connected to the gripper holder (3.1, 3.2) and realized such that an object or respectively workpiece to be gripped can be gripped by manipulating the at least one gripping member (2.1, 2.2),
**characterized in that**
the at least one gripping member (2.1, 2.2) exhibits a flocking (5) at least in the area coming into contact with the object/workpiece to be gripped during the manipulating of the at least one gripping member (2.1, 2.2).

2. The gripper (100) according to claim 1,
wherein the flocking (5) comprises fiber filaments, particularly in the form of short cut fibers, preferably of polyamide, viscose and/or polyester, which are at least partially connected to the at least one gripping member (2.1, 2.2) or at least partially incorporated into the material of the at least one gripping member (2.1, 2.2) in the area which comes into contact with the object/workpiece during the manipulating of the at least one gripping member (2.1, 2.2) such that the fiber filaments preferably project substantially perpendicular from the surface of the gripping member (2.1, 2.2).

3. The gripper (100) according to claim 2,
wherein the region of fiber filaments projecting from the surface of the gripping member (2.1, 2.2) has a length of from 0.1 to 1.0 mm, preferably 0.2 to 0.8 mm, and more preferentially, 0.3 to 0.7 mm.

4. The gripper (100) according to claims 1 to 3,
wherein the flock (5) exhibits fiber filaments having a weight (Dtex) of 2.0 to 5.0 g per 10,000 m, preferably 2.5 to 4.0 g per 10,000 m, and more preferentially 2.8 to 3.8 g per 10,000 m.

5. The gripper (100) according to one of claims 1 to 4,
wherein the gripper (100) is realized as a vacuum gripper comprising the following:
- a flexible suction cup serving as the gripping member (2.1) which limits a suction area (6) connectable to a vacuum source and at least one seal having a sealing surface (4) at least partially facing toward the object/workpiece to be gripped; and
- a suction cup holder serving as a gripper holder (3.1, 3.2) which is connected to a rear end region of the suction cup,
wherein at least part of the sealing surface (4) of the at least one seal is provided with the flocking (5).

6. The gripper (100) according to claim 5,
wherein the suction cup has a front end region defining a suction opening and a seal surrounding the suction opening, particularly in the form of at least one sealing lip, which has a sealing surface (4) at least partially facing toward an object/workpiece to be gripped which is at least partly provided with the flocking (5).

7. The gripper (100) according to claim 5 or 6,
wherein at least one hold-down element is provided which has a contact surface facing toward an object/workpiece to be gripped which is at least partly provided with the flocking (5).

8. The gripper (100) according to claim 7,
wherein the contact surface of the at least one hold-down element is situated in a plane which intersects the suction area (6) limited by the suction cup, wherein the front end region of the suction cup can move relative to the rear end region of the suction cup and relative to the contact surface of the at least one hold-down element by the suction cup changing length.

9. The gripper (100) according to one of claims 1 to 4,
wherein the gripper (100) is realized as gripping tongs and comprises two pincer-like gripper jaws which are pivotable or linearly displaceable relative to one another along suitable guides which serve as gripping members (2.2) and are designed to grasp and/or grip an object/workpiece to be gripped from opposite sides by way of facing gripper surfaces, wherein the gripper surfaces are at least partially provided with the flocking (5).

10. The gripper (100) according to claim 9,
wherein the gripper jaws are coated with an elastic material at least in the area of the gripper surfaces, and wherein the fiber filaments of the flocking (5) at least partially project from the surface of the elastic material.

11. The gripper (100) according to claim 10,
wherein the elastic material is a synthetic rubber, particularly hydrogenated acrylonitrile butadiene rubber (HNBR).

12. The gripper (100) according to one of claims 9 to 11,
wherein the gripper (100) realized as gripping tongs comprises a housing serving as a gripper holder (3.2), in at least part of which a pneumatically operable linear drive is formed.

13. Use of a gripper according to one of claims 1 to 12 for handling wafers, semiconductor products and/or semiconductor components, particularly in the field of semiconductor manufacturing, in particular lithography, or in the field of wafer inspection.

14. Use of a gripper according to one of claims 1 to 12 for handling surface-coated products, particularly in the automotive industry, and/or for handling mirrors and/or optical elements.

## Revendications

1. Préhenseur (100) à actionnement pneumatique sous la forme d'un préhenseur d'aspiration ou d'une pince de préhension, le préhenseur (100) comprenant les éléments suivants :
- un support de préhenseur (3.1, 3.2), par lequel le préhenseur (100) peut être relié, de préférence de manière amovible, à un manipulateur, à un bras de robot ou similaire ; et
- au moins un élément de préhension (2.1, 2.2) qui est relié au support de préhenseur (3.1, 3.2) et est conçu de telle sorte que, lorsque ledit au moins un élément de préhension (2.1, 2.2) est manipulé, un objet à saisir ou une pièce à œuvrer peut être saisi(e),
**caractérisé en ce que**
ledit au moins un élément de préhension (2.1, 2.2) présente un flocage (5) au moins dans la zone qui vient en contact avec l'objet à saisir/la pièce à œuvrer pendant la manipulation dudit au moins un élément de préhension (2.1, 2.2).

2. Préhenseur (100) selon la revendication 1,
dans lequel le flocage (5) présente des filaments de fibres, en particulier sous la forme de fibres coupées court, de préférence en polyamide, en viscose et/ou en polyester, qui, dans la zone qui entre en contact avec l'objet à saisir/la pièce à œuvrer lors de la manipulation dudit au moins un élément de préhension (2.1, 2.2), sont reliés au moins localement audit au moins un élément de préhension (2. 1, 2.2) ou sont logés au moins localement dans le matériau dudit au moins un élément de préhension (2.1, 2.2) de telle sorte que les filaments de fibres font saillie de préférence sensiblement perpendiculairement de la surface de l'élément de préhension (2.1, 2.2).

3. Préhenseur (100) selon la revendication 2,
dans lequel la zone des filaments de fibres faisant saillie de la surface de l'élément de préhension (2.1, 2.2) présente une longueur de 0,1 à 1,0 mm, de préférence de 0,2 à 0,8 mm et de manière particulièrement préférée de 0,3 à 0,7 mm.

4. Préhenseur (100) selon les revendications 1 à 3,
dans lequel le flocage (5) comprend des filaments de fibres ayant un poids (Dtex) de 2,0 à 5,0 g par 10.000 m, de préférence de 2,5 à 4,0 g par 10.000 m et de manière particulièrement préférée de 2,8 à 3,8 g par 10.000 m.

5. Préhenseur (100) selon l'une des revendications 1 à 4,
dans lequel le préhenseur (100) est réalisé sous forme de préhenseur d'aspiration, qui présente les éléments suivants :
- une ventouse flexible servant d'élément de préhension (2.1), qui délimite une chambre d'aspiration (6) susceptible d'être reliée à une source de dépression et qui présente au moins un joint d'étanchéité avec une surface d'étanchéité (4) orientée au moins partiellement dans la direction d'un objet/pièce à saisir ; et
- un support de ventouse servant de support de préhenseur (3.1, 3.2), qui est relié à une zone d'extrémité arrière de la ventouse,
dans lequel la surface d'étanchéité (4) dudit au moins un joint d'étanchéité est pourvue au moins localement du flocage (5).

6. Préhenseur (100) selon la revendication 5,
dans lequel la ventouse présente une zone d'extrémité avant, adjacente à une ouverture d'aspiration, et un joint d'étanchéité entourant l'ouverture d'aspiration, en particulier sous la forme d'au moins une lèvre d'étanchéité qui présente une surface d'étanchéité (4) orientée au moins partiellement dans la direction d'un objet/pièce à saisir, laquelle surface d'étanchéité est pourvue au moins localement du flocage (5).

7. Préhenseur (100) selon la revendication 5 ou 6,
dans lequel est prévu au moins un élément de maintien vers le bas, qui présente une surface d'appui orientée dans la direction d'un objet/pièce à saisir, laquelle surface d'appui est pourvue au moins localement du flocage (5).

8. Préhenseur (100) selon la revendication 7,
dans lequel la surface d'appui dudit au moins un élément de maintien vers le bas se trouve dans un plan qui coupe la chambre d'aspiration (6) délimitée par la ventouse, la zone d'extrémité avant de la ventouse étant mobile par rapport à la zone d'extrémité arrière de la ventouse et par rapport à la surface d'appui dudit au moins un élément de maintien vers le bas, tout en faisant varier la longueur de la ventouse.

9. Préhenseur (100) selon l'une des revendications 1 à 4,
dans lequel le préhenseur (100) est réalisé sous forme de pince de préhension et présente deux mâchoires de préhension pouvant pivoter l'une par rapport à l'autre à la manière d'une pince ou pouvant être déplacées linéairement l'une par rapport à l'autre le long de guides appropriés, lesquelles mâchoires de préhension servent d'élément de préhension (2.2) et sont réalisées pour saisir et/ou serrer, depuis des côtés opposés, un objet ou une pièce à saisir avec des surfaces de préhenseur tournées l'une vers l'autre, les surfaces de préhenseur étant pourvues au moins localement du flocage (5).

10. Préhenseur (100) selon la revendication 9,
dans lequel les mâchoires de préhension sont recouvertes d'un matériau élastique au moins dans la zone des surfaces de préhenseur, et les filaments de fibres du flocage (5) font saillie au moins partiellement de la surface du matériau élastique.

11. Préhenseur (100) selon la revendication 10,
dans lequel le matériau élastique est un caoutchouc synthétique, en particulier un caoutchouc butadiène-acrylonitrile hydrogéné (HNBR).

12. Préhenseur (100) selon l'une des revendications 9 à 11,
dans lequel le préhenseur (100) réalisé sous forme de pince de préhension comprend un boîtier servant de support de préhenseur (3.2) dans lequel est réalisé au moins localement un entraînement linéaire à actionnement pneumatique.

13. Utilisation d'un préhenseur selon l'une des revendications 1 à 12 pour la manipulation de plaquettes (wafers), de produits semi-conducteurs et/ou de composants semi-conducteurs, en particulier dans le domaine de la fabrication de semi-conducteurs, en particulier de la lithographie, ou dans le domaine de l'inspection de plaquettes (wafers).

14. Utilisation d'un préhenseur selon l'une des revendications 1 à 12 pour la manipulation de produits à surface affinée, en particulier dans l'industrie automobile, et/ou pour la manipulation de miroirs et/ou d'éléments optiques.
